# EUROPÄISCHE PATENTSCHRIFT

(11) **EP 1 224 507 B1**
(45) Veröffentlichungstag und Bekanntmachung des Hinweises auf die Patenterteilung: **28.09.2005**
(21) Anmeldenummer: 00974400.4
(22) Anmeldetag: 16.10.2000
(51) Int. Cl.: G03B 21/60, G03B 21/28, G03B 21/30

(54) **PROJEKTIONSWAND**
PROJECTION WALL
PAROI DE PROJECTION

(30) Priorität: 25.10.1999 DE 19951306
(43) Veröffentlichungstag der Anmeldung: 24.07.2002
(73) Patentinhaber: WILKHAHN WILKENING + HAHNE GMBH + CO., 31848 Bad Münder 2 (DE)
(72) Erfinder: IGLSEDER, Heinrich, 31552 Rodenberg (DE); THODE, Jürgen, 30171 Hannover (DE); REMMERS, Burkhard, 30171 Hannover (DE); ENGLISCH, Michael, 27337 Blender (DE)
(74) Vertreter: Tetzner, Michael
(86) Internationale Anmeldenummer: PCT/EP2000/010172
(87) Internationale Veröffentlichungsnummer: WO 2001/031397

(56) Entgegenhaltungen:
- US-A- 4 846 694
- US-A- 4 953 971
- US-A- 5 639 152
- US-A- 5 828 427

## Beschreibung

Die Erfindung betrifft eine Projektionswand mit einem Projektor, einem Umlenkspiegel und einer Bildplatte.

Aus der Praxis ist eine Projektionswand mit einem Projektor, einem Umlenkspiegel und einer Bildplatte bekannt, wobei die auf der Bildplatte darzustellenden Informationen (beispielsweise Daten, Bilder oder sonstige Informationen) über einen mit dem Projektor verbundenen Rechner zuführbar sind. Die Bildplatte hat somit die Funktion eines mit dem Rechner verbundenen Bildschirms, wobei die Bildplatte gegenüber herkömmlichen Bildschirmen wesentlich größer ausgebildet werden kann und sich dadurch insbesondere für das Ansehen und Betrachten der dargestellten Informationen durch eine Personengruppe eignet.

In der US-A-5 828 427, US-A-4 953 971, US-A-4 846 694 werden verschiedene Projektionsgeräte beschrieben.

Aus der WO 97/46995 ist ferner ein Tisch mit einem internen Projektionssystem und einer berührungssensitiven Bildplatte bekannt. Die EP-A-0 050 761 betrifft eine Diabetrachtungsvorrichtung bei der die Bildplatte und der Umlenkspiegel wahlweise in eine Gebrauchsstellung und eine Transportstellung gebracht werden können.

Der Erfindung liegt nun die Aufgabe zugrunde, eine Projektionswand anzugeben, dievielseitiger einsetzbar ist.

Erfindungsgemäß wird diese Aufgabe durch die Merkmale des Anspruches 1 gelöst.

Weitere Ausgestaltungen der Erfindung sind Gegenstand der Unteransprüche.

Die erfindungsgemäße Projektionswand besteht im wesentlichen aus einem Projektor, einem Umlenkspiegel und einer Bildplatte, wobei die Projektionswand mobil ausgebildet ist, und die relative Anordnung von Projektor, Umlenkspiegel und Bildplatte wahlweise in eine Gebrauchsstellung oder eine Transportstellung gebracht werden kann.

Die Bildplatte dient ferner zur Visualisierung eines vom Projekt über den Umlenkspiegel eingestrahlten Bildes und weist eine sensitive, interagierende Oberfläche zur Beeinflussung der dargestellten Daten auf. Ferner sind dass Mittel zur Kopplung wenigstens zweier Bildplatten (3) zweier nebeneinanderstehender Projektionswände zur Bildung einer gemeinsamen Gesamtbildplatte vorgesehen.

In einer weiteren Ausgestaltung der Erfindung weist die Bildplatte eine sensitive, insbesondere eine berührungssensitive Oberfläche zur Beeinflussung der dargestellten Informationen auf. Die Bildplatte könnte beispielsweise eine drucksensitive, wärmesensitive, bewegungssensitive, ortsauflösende oder widerstandssensitive, interagierende Oberfläche aufweisen. Es besteht somit die Möglichkeit, auf die vom Projektor auf der Bildplatte dargestellten Informationen unmittelbar, beispielsweise durch Berührung der Oberfläche, einzugreifen.

In einer besonderen Ausgestaltung der Projektionswand besteht die Möglichkeit, wenigstens zwei nebeneinanderstehende Bildplatten zweier Projektionswände zur Bildung einer gemeinsamen Gesamtbildplatte zu koppeln.

Weitere Vorteile und Ausgestaltungen der Erfindung werden anhand der Beschreibung und der Zeichnung näher erläutert.

In der Zeichnung zeigen
- Fig.1: eine dreidimensionale Darstellung der Projektionswand in der Gebrauchsstellung,
- Fig.2: eine Seitenansicht der Projektionswand in der Gebrauchsstellung,
- Fig.3: eine Seitenansicht der Projektionswand in der Transportstellung,
- Fig.4: eine erste Anordnung von mehreren Projektionswänden und
- Fig.5: eine zweite Anordnung von mehreren Projekionswänden.

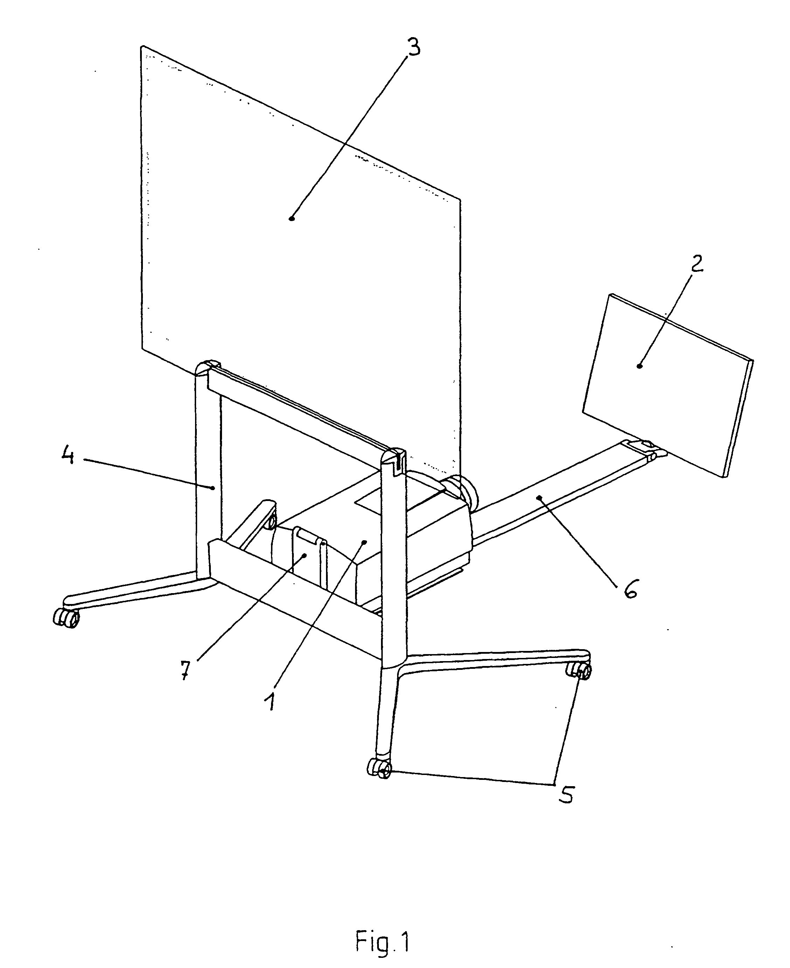

Die in den Fig.1 bis 3 dargestellte Projektionswand besteht im wesentlichen aus einem Projektor 1, einem Umlenkspiegel 2 und einer Bildplatte 3, die an einem gemeinsamen Halterungsgestell 4 befestigt sind.

Das Halterungsgestell weist Rollen 5 auf, durch die die Mobilität der Projektionswand gewährleistet ist.

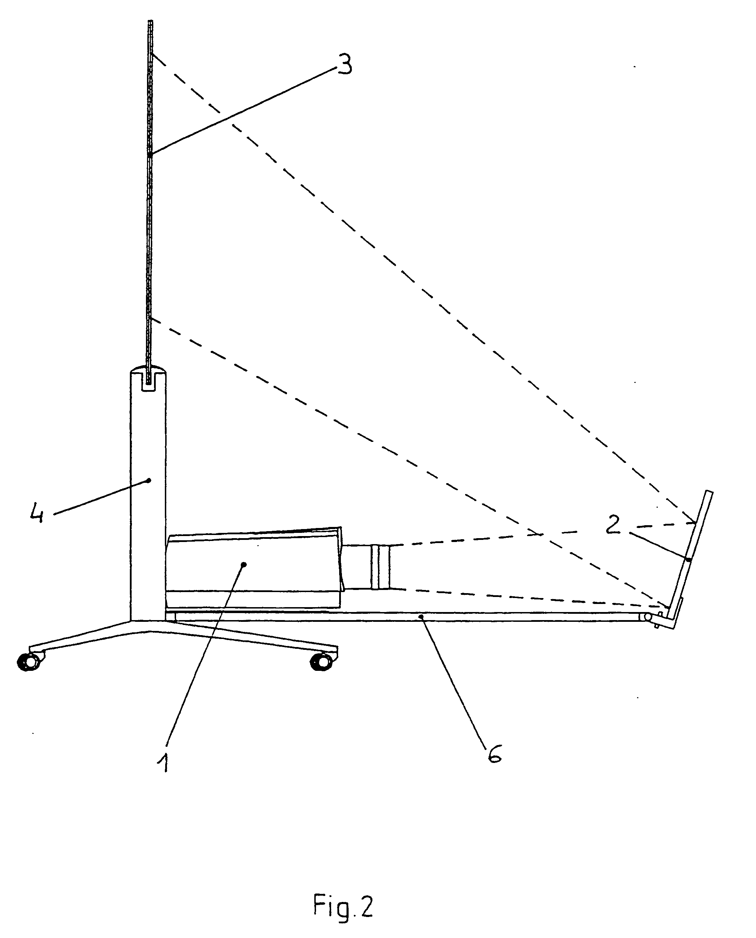

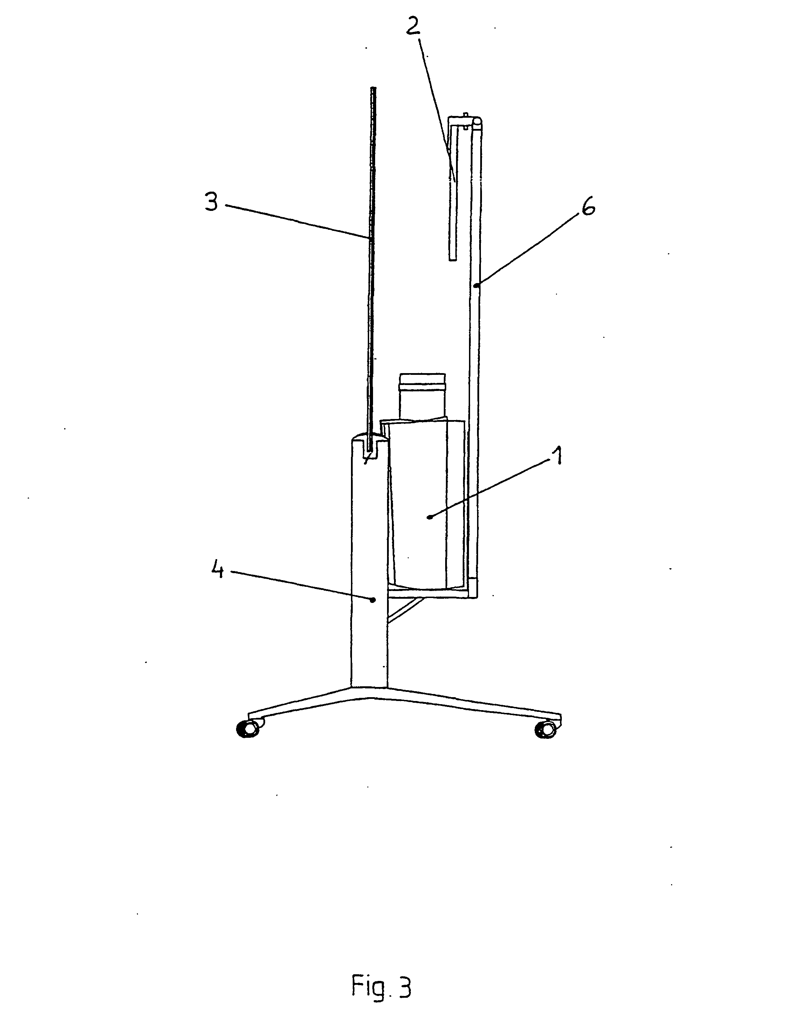

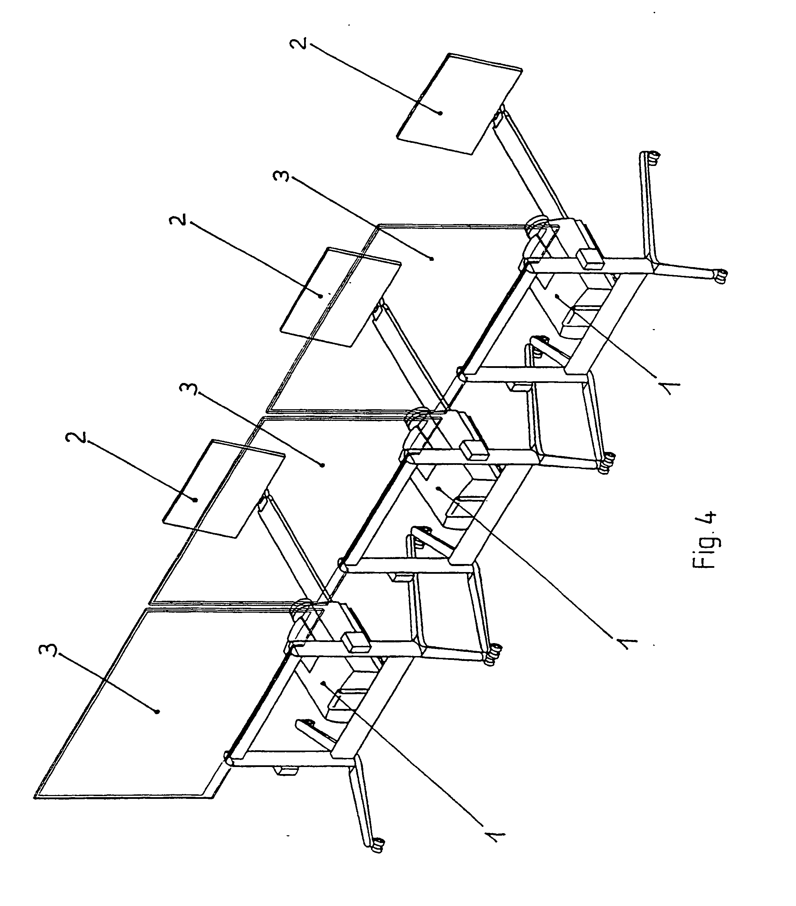

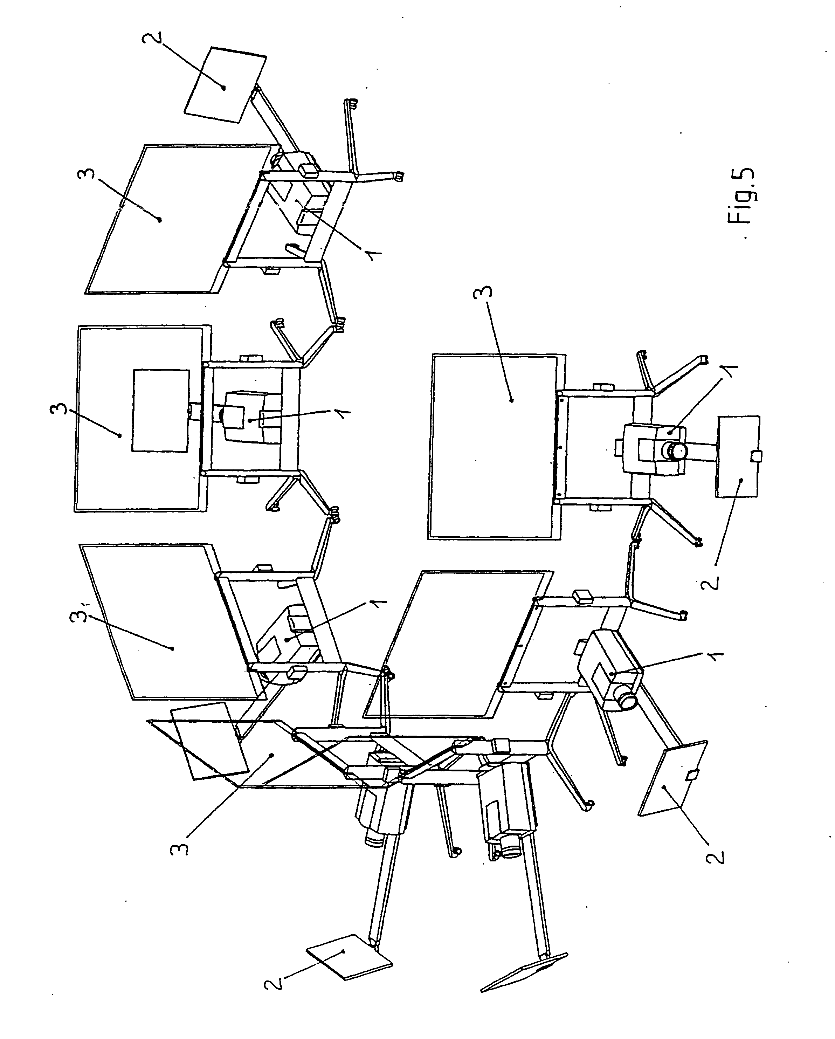

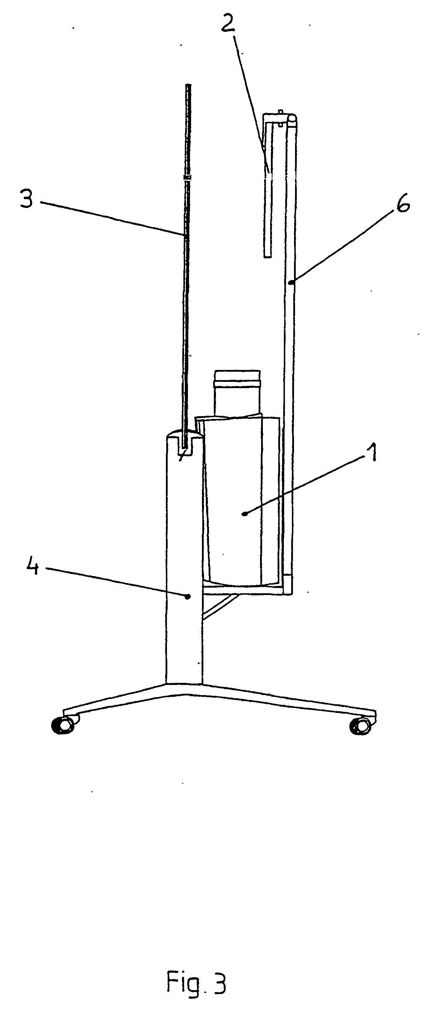

Der Umlenkspiegel 2 ist wiederum an einem Schwenkarm 6 befestigt, der gelenkig um eine Schwenkachse 7 am Halterungsgestell 4 gelagert ist. Im dargestellten Ausführungsbeispiel ist auch der Projektor 1 am Schwenkarm 6 gehaltert. Durch Schwenken des Schwenkarms 6 um die Schwenkachse 7 läßt sich die relative Anordnung von Projektor, Umlenkspiegel und Bildplatte wahlweise in eine Gebrauchsstellung (Fig.1, Fig.2) oder eine Transportstellung (Fig.3) bringen.

Ist der Umlenkspiegel 2, wie im dargestellten Ausführungsbeispiel, zudem gelenkig am Schwenkarm 6 befestigt, kann dieser in der Transportstellung eingeklappt werden, wie in Fig.3 dargestellt.

Die Bildplatte ist vorzugsweise etwa vertikal zur Standfläche ausgerichtet. Der Projektor strahlt das Bild über den Spiegel 2 von hinten auf die Bildplatte 3, welches dann für einen Betrachter von vorne auf der Bildplatte sichtbar wird.

Zur Visualisierung des vom Projektor über den Umlenkspiegel 12 eingestrahlten Bildes wird die Bildplatte beispielsweise durch eine mit einem holographischen Film beschichtete Glasplatte gebildet.

Zur Erzeugung der darzustellenden Bilddaten steht der Projektor 1 zweckmäßigerweise mit einem Rechner in Verbindung. Der in der Zeichnung nicht dargestellte Rechner kann wahlweise am Halterungsgestell befestigt oder von diesem entfernt aufgestellt werden. Die Verbindung zwischen Rechner und Projektor kann über Kabel oder berührungslos erfolgen.

Die Bildplatte der Projektionswand ist auf der einem Betrachter zugewandten Seite mit einer sensitiven, interagierenden Oberfläche zur Beeinflussung der dargestellten Informationen versehen. Die Bildplatte kann zu diesem Zweck beispielsweise eine drucksensitive, wärmesensitive, bewegungssensitive, ortsauflösende oder widerstandssensitive Oberfläche aufweisen. Der Benutzer der Projektionswand kann somit die dargestellten Daten und Informationen nicht nur betrachten, sondern über die Bildplatte auch unmittelbar auf die dargestellten Informationen Einfluß nehmen. Dies setzt natürlich voraus, daß die sensitive Oberfläche mit dem Rechner gekoppelt ist, um den Zusammenhang zwischen dem über dem Projektor dargestellten Bild und den Eingriff über die sensitive Oberfläche zu erkennen.

Die Bildplatte 3 ist somit auf der einen Seite mit einer holographischen Oberfläche und auf der anderen Seite mit einer sensitiven, interagierenden Oberfläche versehen. Das Zusammenspiel beider Oberflächen ermöglicht somit ein interaktives Arbeiten direkt auf der Bildplatte.

Die Projektionswand weist vorzugsweise eine in der Zeichnung nicht näher dargestellte Sendeeinheit zur Übertragung von Daten sowie eine Empfangseinheit zum Empfang von Daten auf.

Darüber hinaus steht die Projektionswand mit einem Rechner in Verbindung, und es sind Mittel zur Kommunikation mit dem Rechner vorgesehen. Diese Kommunikationsmittel können beispielsweise durch eine Waage gebildet werden, durch die das Gewicht eines auf der Waage abgelegten Gegenstands mit Daten und/oder Informationen auf der Bildplatte verknüpft wird. Es besteht auch die Möglichkeit, daß die Kommunikationsmittel zur Identifikation des Benutzers vorgesehen und zumindest teilweise durch Hardware gebildet werden.

Durch die Mobilität der Projektionswand ist diese nicht nur alleine vielseitig einsetzbar, sondern kann auch mit weiteren Projektionswänden zu einer zusammenwirkenden Gesamtanordnung zusammehgestellt werden. In den Figuren 4 und 5 sind zwei Beispiele für solche Anordnungen dargestellt. In Fig.4 sind drei Projektionswände nebeneinander aufgestellt, wobei die drei Bildplatten eine gemeinsame Gesamtbildplatte bilden. Hierzu weist jede Projektionswand Mittel zur Kopplung mit einer benachbarten Bildplatte auf. Diese Kopplungsmittel können durch mechanische, elektrische, optische, akustische, magnetische Mittel gebildet werden. In diesem Zusammenhang sind auch Kombinationen, wie beispielsweise eine elektromagnetische Kopplung, denkbar. Die Kopplung zwischen zwei oder mehreren Bildplatten könnte jedoch auch über eine geeignete Software erfolgen, wobei die hierfür erforderlichen Eingaben direkt über die sensitive, interagierende Oberfläche der Bildplatte erfolgen könnte.

Während in Fig.4 die Bildplatten 3 in einer Ebene angeordnet werden, sind die Bildplatten 3 in der in Fig.5 gezeigten Anordnung bogenförmig ausgerichtet. Je nach Anwendung können auch beliebig andere Anordnungen gewählt werden.

Die oben beschriebenen Projektionswände können einzeln oder in einer Zusammenstellung auf vielfältige Weise eingesetzt werden. Neben der Funktion von herkömmlichen Pinboards und Schreibtafeln eignet sich die Bildplatte beispielsweise auch zur Darstellung und Bearbeitung großer Zeichnungen oder Pläne. Auch lassen sich Bilder und Filme problemlos über die Bildplatte übertragen. Durch eine oder mehrere Bildplatten, die beispielsweise in der in Fig.5 gezeigten Anordnung aufgestellt werden, könnten beispielsweise auch Videokonferenzen abgehalten werden.

## Patentansprüche

1. Projektionswand mit einem Projektor (1), einem Umlenkspiegel (2) und einer Bildplatte (3), wobei der Projektor über den Umlenkspiegel von hinten auf die Bildplatte ein Bild strahlt, welches für einen Betrachter von vorne auf der Bildplatte sichtbar wird und wobei die Bildplatte (3) eine sensitive, interagierende Oberfläche zur Beeinflussung der dargestellten Informationen aufweist,
**dadurch gekennzeichnet,**
**dass** die Projektionswand mobil ausgebildet ist, dass der Projektor (1), der Umlenkspiegel (2) und die Bildplatte (3) an einem gemeinsamen Halterungsgestell (4) befestigt sind, und daß die relative Anordnung von Projektor (1), Umlenkspiegel (2) und Bildplatte (3) wahlweise in eine Gebrauchsstellung oder eine Transportstellung gebracht werden kann,
und **dass** Mittel zur Kopplung wenigstens zweier Bildplatten (3) zweier nebeneinanderstehender Projektionswände zur Bildung einer gemeinsamen Gesamtbildplatte vorgesehen sind.

2. Projektionswand nach Anspruch 1, **dadurch gekennzeichnet, dass** das Halterungsgestell (4) verfahrbar ausgebildet ist.

3. Projektionswand nach Anspruch 1, **dadurch gekennzeichnet, dass** der Umlenkspiegel (2) an einem Schwenkarm (6) befestigt ist, der gelenkig am Halterungsgestell (4) gelagert ist, wobei der Umlenkspiegel (2) durch Schwenken des Schwenkarms (6) wahlweise in die Gebrauchs- oder Transportstellung gebracht werden kann.

4. Projektionswand nach Anspruch 3, **dadurch gekennzeichnet, dass** auch der Projektor (1) auf dem Schwenkarm (6) angeordnet ist.

5. Projektionswand nach einem oder mehreren der vorhergehenden Ansprüche, **dadurch gekennzeichnet, dass** die Projektionswand mit einem Rechner in Verbindung steht.

6. Projektionswand nach Anspruch 1, **dadurch gekennzeichnet, dass** der Projektor (1) über den Rechner ansteuerbar ist.

7. Projektionswand nach einem oder mehreren der vorhergehenden Ansprüche, **dadurch gekennzeichnet, dass** die Projektionswand mit einem Rechner in Verbindung steht und die Bildplatte (3) eine sensitive, interagierende Oberfläche zur Beeinflussung der dargestellten Informationen aufweist, wobei die sensitive Oberfläche mit dem Rechner in Verbindung steht.

8. Projektionswand nach einem oder mehreren der vorhergehenden Ansprüche, **dadurch gekennzeichnet, dass** die Bildplatte (3) auf ihrer einen Seite eine holographische Oberfläche und auf ihrer anderen Seite eine sensitive, interagierende Oberfläche aufweist.

9. Projektionswand nach einem oder mehreren der vorhergehenden Ansprüche, **dadurch gekennzeichnet, dass** die Projektionswand ferner eine Sendeeinheit zur Übertragung von Daten aufweist.

10. Projektionswand nach einem oder mehreren der vorhergehenden Ansprüche, **dadurch gekennzeichnet, dass** die Projektionswand ferner eine Empfangseinheit zum Empfang von Daten aufweist.

11. Projektionswand nach einem oder mehreren der vorhergehenden Ansprüche, **dadurch gekennzeichnet, dass** die Projektionswand mit einem Rechner in Verbindung steht und ferner Mittel zur Kommunikation mit dem Rechner vorgesehen sind.

12. Projektionswand nach Anspruch 11, **dadurch gekennzeichnet, dass** die Kommunikationsmittel eine Waage aufweisen, durch die das Gewicht eines auf der Waage abgelegten Gegenstands mit Daten und/oder Informationen auf der Bildplatte (3) verknüpft wird.

13. Projektionswand nach Anspruch 11, **dadurch gekennzeichnet, dass** die Kommunikationsmittel zur Identifikation des Benutzers vorgesehen sind und zumindest teilweise durch Hardware gebildet werden.

## Claims

1. Projection screen with a projector (1), a deflecting mirror (2) and a display panel (3), in which via the deflecting mirror the projector projects from behind onto the display panel a picture which for a viewer is visible from the front on the display panel and wherein the display panel (3) has a sensitive interactive surface for influencing the displayed information, **characterised in that** the projection screen is constructed so as to be mobile, that the projector (1), the deflecting mirror (2) and the display panel (3) are fixed on a common mounting support (4) and that the relative arrangement of projector (1), deflecting mirror (2) and display panel (3) can be brought as required into a position of use or a transport position, and that means are provided for coupling at least two display panels (3) of two adjacent projection screens in order to form a common full display panel.

2. Projection screen as claimed in Claim 1, **characterised in that** the mounting support (4) is constructed so as to be movable.

3. Projection screen as claimed in Claim 1, **characterised in that** the deflecting mirror (2) is fixed on a pivot arm (6) which is mounted so as to be articulated on the mounting support (4), whereby by pivoting of the pivot arm (6) the deflecting mirror (2) can be brought as required into the position of use or the transport position.

4. Projection screen as claimed in Claim 3, **characterised in that** the projector (1) is also disposed on the pivot arm (6).

5. Projection screen as claimed in one or more of the preceding claims, **characterised in that** the projection screen is connected to a computer.

6. Projection screen as claimed in Claim 1, **characterised in that** the projector (1) can be controlled via the computer.

7. Projection screen as claimed in one or more of the preceding claims, **characterised in that** the projection screen is connected to a computer and the display panel (3) has a sensitive interactive surface for influencing the displayed information, the sensitive surface being connected to the computer.

8. Projection screen as claimed in one or more of the preceding claims, **characterised in that** the display panel (3) has a holographic surface on one side and a sensitive interactive surface on its other side.

9. Projection screen as claimed in one or more of the preceding claims, **characterised in that** the projection screen also has a transmitter unit for the transfer of data.

10. Projection screen as claimed in one or more of the preceding claims, **characterised in that** the projection screen also has a receiver unit for the reception of data.

11. Projection screen as claimed in one or more of the preceding claims, **characterised in that** the projection screen is connected to a computer and furthermore means are provided for communication with the computer.

12. Projection screen as claimed in Claim 11, **characterised in that** the communication means have a weighing machine by which the weight of an object placed on the weighing machine is associated with data and/or information on the display panel (3).

13. Projection screen as claimed in Claim 11, **characterised in that** the communication means are provided for identification of the user and are formed at least in part by hardware.

## Revendications

1. Ecran de projection avec un projecteur (1) un miroir de renvoi (2) et un panneau à image (3), dans lequel le projecteur projette par l'arrière une image sur le panneau à image, par l'intermédiaire du miroir de renvoi, laquelle image est, pour un observateur, visible de l'avant sur le panneau à image, et le panneau à image (3) présente une surface sensible, interactive, pour agir sur l'information visualisée,
**caractérisé en ce que**
l'écran de projection est mobile, **en ce que** le projecteur (1), le miroir de renvoi (2) et le panneau à image (3) sont fixés à un bâti de support (4) commun, et **en ce que** l'agencement relatif du projecteur (1), du miroir de renvoi (2) et du panneau à image (3) peut être à volonté placé en position d'utilisation ou en position de transport,
et **en ce que** des moyens sont prévus pour coupler au moins deux panneaux à image (3) de deux écrans de projection disposés côte à côte, pour former un panneau à image global commun.

2. Ecran de projection selon la revendication 1, **caractérisé en ce que** le bâti de support (4) commun est déplaçable.

3. Ecran de projection selon la revendication 1, **caractérisé en ce que** le miroir de renvoi (2) est fixé à un bras pivotant (6) qui est monté de manière articulée sur le bâti de support (4), le miroir de renvoi (2) pouvant être amené à volonté en position d'utilisation ou de transport par pivotement du bras pivotant (6).

4. Ecran de projection selon la revendication 3, **caractérisé en ce que** le projecteur (1) également est agencé sur le bras pivotant (6).

5. Ecran de projection selon une ou plusieurs des revendications précédentes, **caractérisé en ce que** l'écran de projection est relié à un ordinateur.

6. Ecran de projection selon la revendication 1, **caractérisé en ce que** le projecteur (1) peut être commandé par l'ordinateur.

7. Ecran de projection selon une ou plusieurs des revendications précédentes, **caractérisé en ce que** l'écran de projection est reliée à un ordinateur, et le panneau à image (3) présente une surface sensible, interactive, pour agir sur l'information visualisée, la surface sensible étant reliée à l'ordinateur.

8. Ecran de projection selon une ou plusieurs des revendications précédentes, **caractérisé en ce que** le panneau à image (3) présente sur une face un surface holographique, et sur l'autre face une surface sensible, interactive.

9. Ecran de projection selon une ou plusieurs des revendications précédentes, **caractérisé en ce que** l'écran de projection présente en outre une unité de transmission pour transférer des données.

10. Ecran de projection selon une ou plusieurs des revendications précédentes, **caractérisé en ce que** l'écran de projection comprend en outre une unité de réception pour recevoir des données.

11. Ecran de projection selon une ou plusieurs des revendications précédentes, **caractérisé en ce que** l'écran de projection est relié à un ordinateur, et des moyens sont en outre prévus pour communiquer avec l'ordinateur.

12. Ecran de projection selon la revendication 11, **caractérisé en ce que** les moyens de communication comprennent une balance grâce à laquelle le poids d'un objet déposé sur la balance est associé à des données et/ou des informations sur le panneau à image (3).

13. Ecran de projection selon la revendication 11, **caractérisé en ce que** les moyens de communication sont prévus pour l'identification de l'utilisateur, et sont au moins en partie formé par du matériel.
